# EUROPÄISCHE PATENTANMELDUNG

(11) **EP 0 816 993 A1**
(43) Veröffentlichungstag der Anmeldung: **07.01.1998**
(21) Anmeldenummer: 97110567.1
(22) Anmeldetag: 27.06.1997
(51) Int. Cl.: G06F 3/033

(54) **Graphische Bedieneinrichtung zur Steuerung eines Computers**

(30) Priorität: 27.06.1996 DE 29611277 U
(71) Anmelder: SIEMENS AKTIENGESELLSCHAFT, 80333 München (DE)
(72) Erfinder: Franke, Petra, 91058 Erlangen (DE)

(57) **Zusammenfassung**

Es ist ein Monitor zur Anzeige von Bildschirmbedienfeldern (4...8) vorhanden. Diese sind jeweils aufgeteilt in einen ersten vertikalen Bereich (1) zur Ausgabe von Meldungen zum aktuellen Bildschirmbedienfeld (4...8), einen zweiten vertikalen Bereich (2) zur Ausgabe von ersten anwählbaren Feldern (9) zur Aktivierung bzw. Deaktivierung von Steuer- bzw. Meldefunktionen des Computers oder von weiteren, insbesondere unterlagerten Bildschirmbedienfeldern (6,7,8), und einen dritten vertikalen Bereich (3) zur Ausgabe von anwendungsabhängigen Anzeigen (10) und/oder von zweiten anwählbaren Feldern (10), womit anwendungsabhängige Bedienungen des aktuellen Bildschirmbedienfeldes (4...8) durchführbar sind. Die erfindungsgemäße Bedieneinrichtung zeichnet sich dadurch aus, daß die Teilung eines Bildschirmbedienfeldes in drei vertikale Bereiche die Übersichtlichkeit und Bedienungssicherheit erhöht, und eine abgestufte Bedienungsfunktionalität ermöglicht.

## Beschreibung

Die Erfindung betrifft eine graphische Bedieneinrichtung zur Steuerung eines Computers, mit einem Monitor zur Anzeige von Bildschirmbedienfeldern.

Zur Bedienung von Computern und der auf Computern ablaufenden Anwenderprogramme werden üblicherweise sogenannte Bildschirmbedienmasken eingesetzt. Derartige graphische Bedienoberflächen, welche auch Bildschirmbedienfelder genannt werden, stellen die Schnittstelle zwischen einer Bedienperson und dem Computer bzw. dem jeweiligen, in der Bearbeitung befindlichen Computerprogramm dar.

In einer mit der Gestaltung von herkömmlichen Bedienelementen, wie z.B. Fernbedienungen, Armaturengruppen z.B. in Kraftfahrzeugen, an Haushaltgeräten und vielem mehr, vergleichbaren Weise sollten auch Bildschirmbedienmasken möglichst 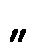 bedienungsfreundlich" gestaltet werden. Ein Benutzer soll also die jeweils zur Verfügung stehenden graphischen Bedienmittel möglichst schnell, fehlerfrei identifizieren und sachgerecht bedienen können. Diese Anforderung ist bei Bedieneinrichtungen für Computer, welche auf Bildschirmbedienfeldern beruhen, besonders wichtig. Dies hat seine Ursache darin, daß zum einen in der Regel eine große Vielzahl von Meldungen und anwählbaren Schaltfeldern über ein einziges Bildschirmbedienfeld ausgebbar sind, und zum anderen die begrenzte Anzeigefläche auf einem Computermonitor besondere Anforderung an die Aufmerksamkeit von Benutzern stellt. Da es bei graphischen Bedieneinrichtungen zur Computersteuerung ferner üblich ist, daß von einem Bildschirmbedienfeld auf mehrere untergeordnete, quasi dahinter liegende Bildschirmbedienfelder verzweigt werden kann, sollten die einzelnen Bildschirmbedienfelder zur Aufrechterhaltung der Übersichtlichkeit möglichst übersichtlich strukturiert und somit leicht bedienbar sein.

Der Erfindung liegt die Aufgabe zugrunde, eine derartige übersichtlich strukturierte und somit leicht bedienbare graphische Bedieneinrichtung zur Steuerung von Computern anzugeben, welche auch für ungeübte Benutzer aus dem nichtindustriellen Bereich handhabbar ist.

Die Aufgabe wird gelöst mit einer graphischen Bedieneinrichtung, deren Bildschirmbedienfelder jeweils aufgeteilt sind in einen ersten vertikalen Bereich zur Ausgabe von Meldungen zum aktuellen Bildschirmbedienfeld, einen zweiten vertikalen Bereich zur Ausgabe von ersten anwählbare Feldern zur Aktivierung bzw. Deaktivierung von Steuer- bzw. Meldefunktionen des Computers oder von weiteren, unterlagerten Bildschirmbedienfeldern, und einen dritten vertikalen Bereich zur Ausgabe von anwendungsabhängigen Anzeigen und/oder von zweiten anwählbaren Feldern, womit anwendungsabhängige Bedienungen des aktuellen Bildschirmbedienfeldes durchführbar sind.

Die erfindungsgemäße Bedieneinrichtung zeichnet sich durch einen besonders übersichtlichen Aufbau der einzelnen Bildschirmbedienfelder aus. Diese wird bewirkt durch die Aufteilung und Zusammenfassung von ausgewählten einzelnen Meldungen und Steuerfeldern in streifenförmige vertikale Bereiche. Die Bedienungsfreundlichkeit der erfindungsgemäßen Bildschirmbedienfelder wird weiter dadurch erhöht, daß die drei vertikalen Bereichen ferner eine quasi bedienungstechnisch abgestufte Bedienungsfunktionalität aufweisen.

So ist der erste vertikale Bereich zur Ausgabe von Meldungen vorbehalten, welche sich auf das aktuelle Bildschirmbedienfeld als solches beziehen. Der erste vertikale Bereich hat somit eine stark übergeordnete Funktionalität und soll einem Bediener auf die Bedienbarkeit der in den zweiten und dritten vertikalen Bereichen angebotenen anwählbaren Felder bzw. spezifischen anwendungsabhängigen Anzeigen hinweisen und die Bedienbarkeit erleichtern.

Die Bedienbarkeit der erfindungsgemäßen Bedieneinrichtung wird weiter dadurch erleichtert, daß auch zwischen dem ersten und der Gruppe aus dem zweiten und dritten Bereich einerseits, und auch zwischen dem zweiten und dem dritten vertikalen Bereich andererseits quasi bedienungstechnische Abstufungen vorhanden sind.

So sind im zweiten vertikalen Bereich anwählbare Felder zur Aktivierung bzw. Deaktivierung von Steuer- und Meldefunktionen des Computers bzw. des aktuell aktiven Anwenderprogrammes und/oder anwählbare Felder zur Aktivierung bzw. Deaktivierung von weiteren, insbesondere unterlagerten Bildschirmbedienfeldern zusammengefaßt, welche zum aktuellen Bildschirmbedienfeld quasi unter- oder nebengeordnete weitere Bedienungen und Meldungen ermöglichen. Über die anwählbaren Felder des zweiten vertikalen Bereiches sind somit z.B. eine Auslösung von weitergehenden Steuerhandlungen, Quittierungen, ein quasi Aufblättern von weiteren geschachtelten Bildschirmbedienmasken bzw. z.B. ausgehend von einer unterlagerten Bildschirmbedienmaske ein Zurückschalten auf überlagerte bzw. übergeordnete Bildschirmbedienmasken möglich. Der zweite vertikale Bereich nimmt somit im Rahmen einer Bedienungshierarchie eine mittlere bzw. zentrierte Funktionalität ein.

Demgegenüber ist der dritte vertikale Bereich eines Bildschirmbedienfeldes der erfindungsgemäßen graphischen Bedieneinrichtung speziell vorgesehen für die Ausgabe von anwendungsabhängigen Anzeigen und/oder von zweiten anwählbaren Feldern, womit anwendungsabhängige Bedienungen des aktuellen Bildschirmbedienfeldes durchführbar sind. Der dritte vertikale Bereich nimmt somit im Rahmen einer Bedienungshierarchie eine untere Funktionalität ein, welche auch als Basisfunktionalität bezeichnet werden kann, da dessen anwählbare Felder möglichst ausschließlich, direkt das aktuelle Bildschirmbedienfeld betreffen.

Weitere vorteilhafte Ausführungsformen der Erfindung sind in den Unteransprüchen angegeben.

Die Erfindung wird an Hand von in den nachfolgend kurz angeführten Figuren dargestellten Ausführungsbeispielen näher erläutert. Dabei zeigt
- FIG 1:: eine prinzipielle Darstellung des grundsätzlichen Aufbaus eines Bildschirmbedienfeldes gemäß der Erfindung,
- FIG 2:: ein erstes Beispiel für ein Bildschirmbedienfeld gemäß der Erfindung, wobei im zweiten vertikalen Bereich eine beispielhafte Gruppe von anwählbaren Feldern zur Aktivierung bzw. Deaktivierung von Steuer- und Meldefunktionen des Computers oder von weiteren, unterlagerten Bildschirmbedienfeldern angezeigt ist,
- FIG 3:: ein zweites Beispiel für ein Bildschirmbedienfeld gemäß der Erfindung, welches ein zu einem anwählbaren Feld des Bildschirmbedienfeldes von Figur 2 gehöriges unterlagertes Bildschirmbedienfeld zeigt
- FIG 4:: ein drittes Beispiel für ein Bildschirmbedienfeld gemäß der Erfindung, welches ein zu einem anwählbaren Feld des Bildschirmbedienfeldes von Figur 3 gehöriges unterlagertes Bildschirmbedienfeld zeigt,
- FIG 5:: ein viertes Beispiel für ein Bildschirmbedienfeld gemäß der Erfindung, welches ein weiteres, zu einem anwählbaren Feld des Bildschirmbedienfeldes von Figur 2 gehöriges unterlagertes Bildschirmbedienfeld zeigt

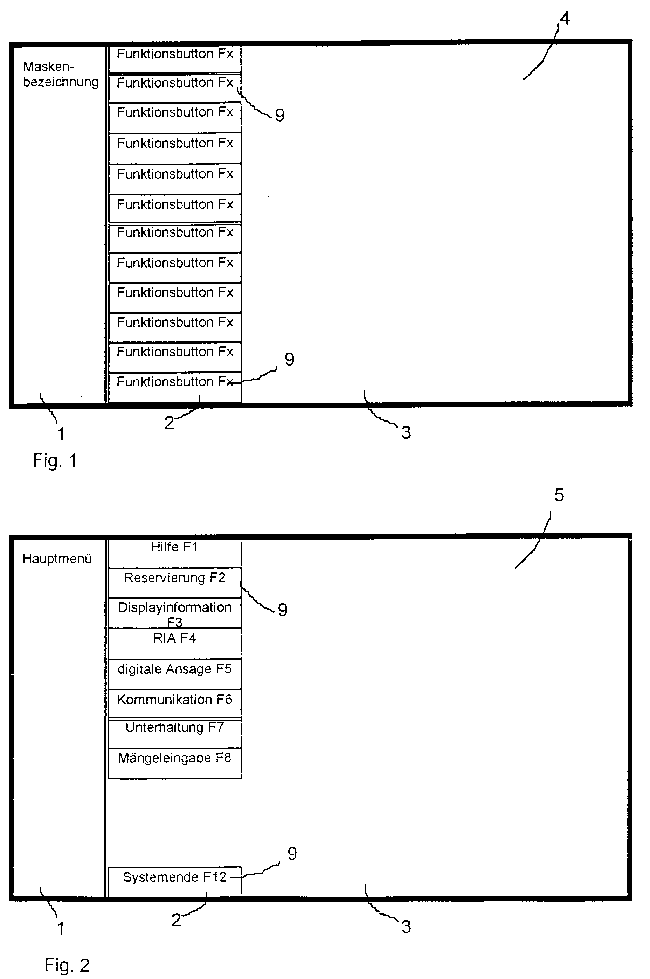

In Figur 1 ist beispielhaft der prinzipielle Aufbau eines gemäß der Erfindung gestalteten Bildschirmbedienfeldes 4 dargestellt. Dabei ist der erste vertikale Bereich 1, welcher zur Ausgabe von allgemeinen, übergeordneten und das aktuelle Bedienfeld als solches betreffenden Meldungen vorgesehen ist, vorteilhaft am linken Rand des Bildschirmbedienfeldes 4. In Figur 1 ist der erste Bereich pauschal mit dem Begriff 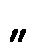 Maskenbezeichnung" gekennzeichnet.

Der zweite vertikale Bereich 2, der zur Ausgabe von ersten anwählbaren Feldern 9 dient, ist in der Prinzipdarstellung von Figur 1 vorteilhaft rechts neben dem ersten vertikalen Bereich positioniert. Dieser Bereich 2 dient erfindungsgemäß zur Ausgabe von Feldern 9, die zum Zwecke der Aktivierung bzw. Deaktivierung von Steuer- bzw. Meldefunktionen des Computers oder von weiteren, insbesondere unterlagerten Bildschirmbedienfeldern angewählt werden können. Gemäß einer in Figur 1 bereits dargestellten vorteilhaften Ausführung sind die ersten anwählbaren Felder 9 des zweiten vertikalen Bereiches 2) vertikal übereinanderliegend angeordnet und beispielhaft allgemein mit 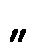 Funktionsbutton Fx" bezeichnet. Aufgrund der bevorzugten, zwischen dem ersten und dritten Bereich liegenden, in die Mitte gerückten quasi zentralen Anzeige des zweiten vertikalen Bereiches 2 im Bildschirmbedienfeld 4 können dessen anwählbare Felder von einem Benutzer auch ihrer übergeordneten Funktion entsprechend einfach, zielgerichtet und fehlerfrei angewählt werden.

Zur Bedienung der anwählbaren Felder können herkömmliche, bei der Bildschirmbedienung übliche Elemente eingesetzt werden, wie z.B. das umgangssprachlich als 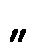 Maus" bezeichnete Gerät.

Der dritte vertikale Bereich 3 der erfindungsgemäßen graphischen Bedieneinrichtung, welcher vorgesehen ist zur Ausgabe von anwendungsabhängigen Anzeigen und/oder von zweiten anwählbaren Feldern , womit anwendungsabhängige Bedienungen des aktuellen Bildschirmbedienfeldes 4 durchführbar sind wird in der bevorzugten Prinzipdarstellung von Figur 1 rechts neben dem zweiten vertikalen Bereich 2 liegend angezeigt. Da dieser Bereich zur Ausgabe von anwählbaren Feldern vorgesehen ist, welche unmittelbar die Bedienbarkeit des aktuellen Bildschirmbedienfeldes ermöglichen, ist gemäß einer weiteren, in Figur 1 ebenfalls bereits dargestellten Ausführungsform dem dritte Bereich 3 auf dem Bildschirmbedienfeld 4 gegenüber den daneben liegenden ersten und zweiten Bereichen 1,2 die größte Anzeigefläche zugeordnet. Vorteilhaft sind die anwendungsabhängigen Anzeigen und/oder zweiten anwählbaren Felder auch im des dritten vertikalen Bereiches 3 vertikal übereinanderliegend angeordnet.

Die in den folgenden Figuren 2 bis 5 dargestellten beispielhaften Bildschirmbedienfelder 5, 6, 7 und 8 bilden eine zusammengehörige Gruppe. An deren Beispiel sollen die Gestaltung und die Vorteile von Bildschirmbedienfeldern gemäß der Erfindung nochmals erläutert werden.

In Figur 2 ist ein erstes Bildschirmbedienfeld 5 dargestellt, welches im Rahmen einer beispielhaften Gruppe von zusammengehörigen und aufeinander abgestimmten Bildschirmbedienfeldern für eine Steuerungsanwendung eine übergeordnete Funktion einnimmt. Dementsprechend wird im dazugehörigen ersten Bereich die beispielhafte Meldung 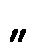 Hauptmenü" ausgegeben. Ferner ist es entsprechend dieser zentralen Bedienungsfunktionalität über einige anwählbare Felder 9 des zweiten vertikalen Bereiches 2 möglich, weitere, unterlagerte Bildschirmbedienfelder der beispielhaften Gruppe zu aktivieren.

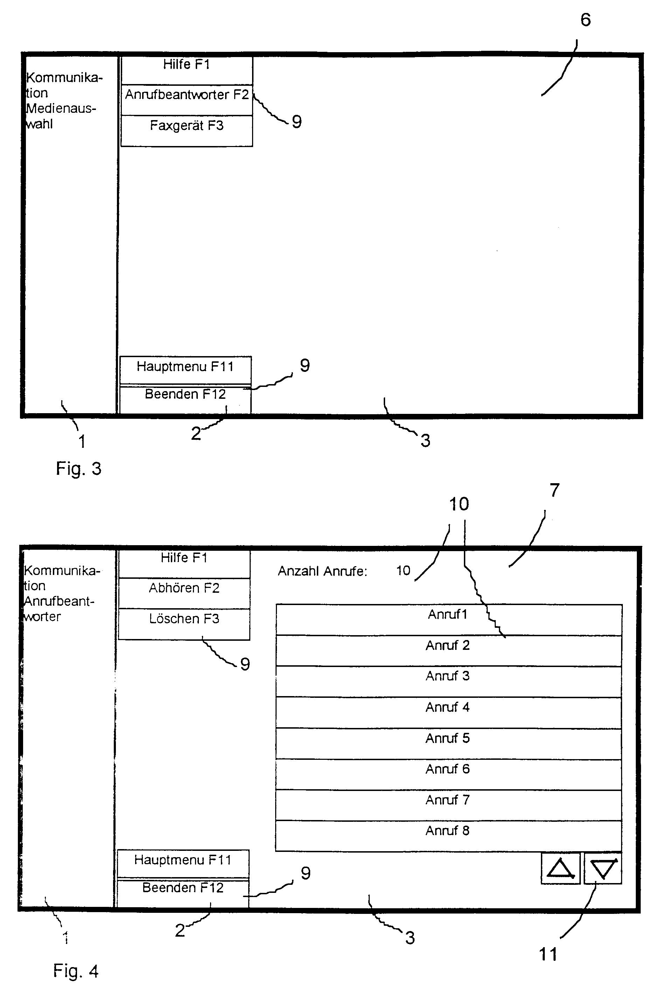

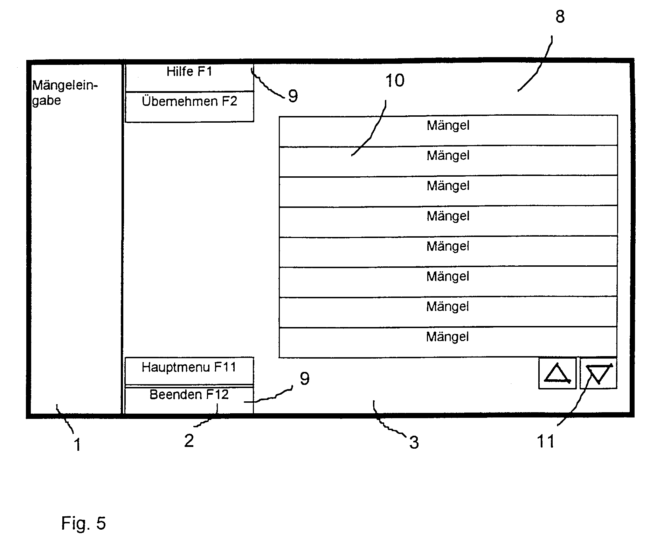

So kann durch Auswahl des mit 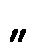 Kommunikation F6" bezeichneten anwählbaren Feldes 9 von Figur 2 das unterlagerte Bildschirmbedienfeld 6 in Figur 3 aktiviert werden, in dessen ersten vertikalen Bereich 1 die Meldungen 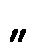 Kommunikation", Medienauswahl" ausgegeben werden. Ferner kann durch Auswahl des mit 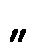 Mängeleingabe F8" bezeichneten anwählbaren Feldes 9 von Figur 2 das unterlagerte Bildschirmbedienfeld 8 in Figur 5 aktiviert werden, in dessen ersten vertikalen Bereich 1 die Meldung 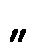 Mängeleingabe" ausgegeben wird. Über die mit 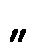 Reservierung F2", 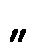 Displayinformation F3", 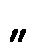 RIA F4", 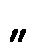 digitale Ansage F" und 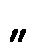 Unterhaltung F7" bezeichneten Felder 9 im zweiten vertikalen Bereich 2 des Bildschirmbedienfeldes 5 können weitere, unterlagerte und zur beispielhaften Gruppe gehörigen Bildschirmbedienfelder aktiviert werden. Diese sind aber entsprechend den in den Figuren 1 bis 5 dargestellten Bildschirmbedienfeldern gestaltet und somit aus Gründen der Übersichtlichkeit nicht dargestellt.

Schließlich können über die mit 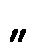 Hilfe F1" und 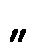 Systemende F12" bezeichneten anwählbaren Felder 9 des zweiten vertikalen Bereiches 2 von Figur 2 allgemeine Steuer- und Meldefunktionen des Computers aktiviert werden.

Da das Bildschirmbedienfeld 5 in Figur 2 für die in den nachfolgenden Figuren 3 bis 5 dargestellten Felder eine quasi übergeordnete Funktion einnimmt, sind in dessen dritten vertikalen Bereich 3 im Gegensatz zu den dazugehörigen, untergeordneten Bildschirmbedienfeldern in den Figuren 3 bis 5 keine anwendungsabhängigen Anzeigen bzw. zweite anwählbare Felder angezeigt, womit anwendungsabhängige Bedienungen durchführbar sind.

Über das in Figur 3 dargestellte und mit der Meldung 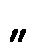 Kommunikation" 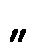 Medienauswahl" im ersten vertikalen Bereich 1 versehene Bildschirmbedienfeld 6 können weitere, über- oder unterlagerte Bildschirmbedienfelder der beispielhaften Gruppe aktiviert werden. So können über die mit 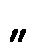 Anrufbeantworter F2" und 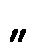 Faxgerät F3" bezeichneten Felder 9 des zweiten Bereiches 2 des Bedienfeldes 6 entsprechende, unterlagerte Bildschirmbedienfelder aktiviert werden. In Figur 4 ist beispielhaft eines der beiden, mit 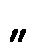 Kommunikation" 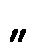 Anrufbeantworter" bezeichnete Bildschirmbedienfeld 7 dargestellt. Auf Grund dieser im Vergleich z.B. zum Bildschirmbedienfeld 7 in Figur 4 übergeordneten Funktion des Bildschirmbedienfeldes 6 von Figur 3 sind auch in dessen dritten vertikalen Bereich 3 keine anwendungsabhängigen Anzeigen oder zweite anwählbare Felder zur anwendungsabhängigen Bedienung der Bildschirmbedienmaske angezeigt.

Schließlich weist aber der dritte vertikale Bereich 3 der Bildschirmbedienmaske 7, welche in der Anzeige- und Bedienungshierarchie quasi in der untersten Ebene liegt, der Funktion dieser Bildschirmbedienmaske als 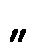 Kommunikation" 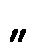 Anrufbeantworter" entsprechende anwendungsabhängige Anzeigen bzw. zweite anwählbare Felder 10 auf. Diese sind wiederum vorteilhaft vertikal übereinanderliegend angeordnet und in Figur 4 mit 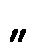 Anruf 1" bis 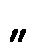 Anruf 8" bezeichnet. Eine darüber befindliche anwendungsabhängige Anzeige mit dem Inhalt 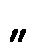 Anzahl Anrufe: 10" informiert beispielhaft über die aktuelle Anzahl eingegangener Anrufe. Ein derartiger Anruf kann durch Aktivierung des entsprechenden anwählbaren Feldes aus der Liste 10 ausgewählt werden. Über die in dem daneben liegenden zweiten vertikalen Bereich 2 enthaltenen ersten anwählbaren Felder 9 können dazugehörige Steuer- und Meldefunktionen des Computers aktiviert oder deaktiviert werden. So kann durch Anwahl eines der Felder mit den Bezeichnungen 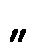 Abhören F2" oder 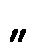 Löschen F3" eine die Weiterbearbeitung eines im dritten vertikalen Bereich ausgewählten Anrufes durch Aktivierung entsprechender Steuerfunktionen des Computers erfolgen.

Ferner können über die mit 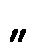 Hilfe F1" und 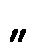 Beenden F12" bezeichneten anwählbaren Felder 9 im zweiten vertikalen Bereich 2 des Bedienfeldes 6 der Figur 3, aber auch über die entsprechenden Felder in den Bedienfeldern 7, 8 von Figur 4, 5 wiederum übergeordnete Steuer- und Meldefunktionen des Computers aktiviert bzw. deaktiviert werden. Schließlich kann über das jeweils mit 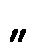 Hauptmenü F11" bezeichnete Felder 9 des zweiten Bereiches 2 in den Bedienfeldern 6,7,8 der Figuren 3,4,5 auf das zentral übergeordnete Bildschirmbedienfeld 5 in Figur 2 zurückgeschaltet werden.

Das in der letzten Figur 5 dargestellte, mit 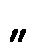 Mängeleingabe" bezeichnete Bildschirmbedienfeld 8 kann durch Auswahl des entsprechend ebenfalls mit 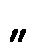 Mängeleingabe F8" bezeichnete und im zweiten vertikalen Bereich 2 von Figur 2 enthaltene Feld 9 aktiviert werden. Dessen dritter vertikaler Bereich ermöglicht anwendungsabhängige Bedienungen des Bildschirmbedienfeldes, indem in eine Liste von zweiten anwählbaren Feldern 10 aktuell aufgetretene Mängel eingetragen werden können. Über ein im zweiten vertikalen Bereich 2 von Figur 5 enthaltenes, mit 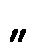 Übernehmen F2" bezeichnetes anwählbares Feld 9 können die eingegebenen Texte durch Aktivierung von entsprechenden Steuer- bzw. Meldefunktionen dem Computer bzw. einem aktuell aktiven Anwenderprogramm übergeben werden.

Die Erfindung hat den weiteren Vorteil, daß alle Bildschirmbedienfelder einer zusammenhängenden Gruppe die erfindungsgemäße Aufteilung in je einen ersten, zweiten und dritten vertikalen Bereich aufweisen können und somit quasi identisch aufgebaut sein können. Dennoch wird die Übersichtlichkeit und damit die Sicherheit der Bedienung eines jeden Bildschirmbedienfeldes in keiner Weise beeinträchtigt, auch wenn einzelne Bedienfelder sich in unterschiedlichen Bedienungsebenen befinden, also jeweils über- und/oder untergeordnete weitere Bildschirmbedienmasken vorhanden sind. Ein geordnetes 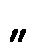 Blättern" innerhalb einer Gruppe von erfindungsgemäßen Bildschirmbedienmasken ist also einem Benutzer auch bei einer relativ großen sogenannten 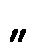 Schachtelungstiefe" zusammengehöriger Bildschirmbedienmasken einer Gruppe möglich.

## Patentansprüche

1. Graphische Bedieneinrichtung zur Steuerung eines Computers, mit einem Monitor zur Anzeige von Bildschirmbedienfeldern (4...8), die jeweils aufgeteilt sind in
a) einen ersten vertikalen Bereich (1) zur Ausgabe von Meldungen zum aktuellen Bildschirmbedienfeld (4...8),
b) einen zweiten vertikalen Bereich (2) zur Ausgabe von ersten anwählbare Feldern (9) zur Aktivierung bzw. Deaktivierung von Steuer- bzw. Meldefunktionen des Computers oder von weiteren, insbesondere unterlagerten Bildschirmbedienfeldern (6,7,8), und
c) einen dritten vertikalen Bereich (3) zur Ausgabe von anwendungsabhängigen Anzeigen (10) und/oder von zweiten anwählbaren Feldern (10), womit anwendungsabhängige Bedienungen des aktuellen Bildschirmbedienfeldes (4...8) durchführbar sind.

2. Bedieneinrichtung nach einem der vorangegangenen Ansprüche, wobei der erste Bereich (1) eines Bildschirmbedienfeldes (4...8) am linken Rand des Monitors und der zweite (2) und dritte Bereich (3) jeweils rechts daneben liegend angezeigt werden.

3. Bedieneinrichtung nach einem der vorangegangenen Ansprüche, wobei dem dritte Bereich (3) auf dem Bildschirmbedienfeld (4...8) gegenüber dem ersten und zweiten Bereich (1) die größte Anzeigefläche zugeordnet ist.

4. Bedieneinrichtung nach einem der vorangegangenen Ansprüche, wobei die ersten anwählbaren Felder (9) des zweiten vertikalen Bereiches (2) vertikal übereinanderliegend angeordnet sind.

5. Bedieneinrichtung nach einem der vorangegangenen Ansprüche, wobei die anwendungsabhängigen Anzeigen (10) und/oder zweiten anwählbaren Felder (11) des dritten vertikalen Bereiches (3) vertikal übereinanderliegend angeordnet sind.
